Europäisches Patentamt

European Patent Office

Office européen des brevets

(11) Publication number: **0 172 259**
**B1**

(12) **EUROPEAN PATENT SPECIFICATION**

(45) Date of publication of patent specification: **15.02.89**

(51) Int. Cl.⁴: **C 08 L 77/00**

(21) Application number: **84104133.8**

(22) Date of filing: **12.04.84**

(54) **Fire-retardant fiber-reinforced polyamide resin composition.**

(30) Priority: **13.04.83 JP 64938/83**

(43) Date of publication of application:
**26.02.86 Bulletin 86/09**

(45) Publication of the grant of the patent:
**15.02.89 Bulletin 89/07**

(84) Designated Contracting States:
**DE FR GB**

(56) References cited:
**EP-A-0 002 514**
**FR-A-2 179 161**
**FR-A-2 378 824**

(73) Proprietor: **MITSUBISHI GAS CHEMICAL COMPANY, INC.**
**5-2, Marunouchi 2-chome Chiyoda-Ku Tokyo (JP)**

(72) Inventor: **Shimizu, Senzo**
**735-25-2, Odake**
**Odawara-shi Kanagawa-ken (JP)**
Inventor: **Nagano, Mitsuyasu**
**2-9-10, Fujimino**
**Hiratsuka-shi Kanagawa-ken (JP)**
Inventor: **Imae, Yoshio**
**2-7-8, Ishigamidai Oiso-machi**
**Naka-gun Kanagawa-ken (JP)**
Inventor: **Morishige, Kiyoshi**
**480-6, Nagamochi**
**Hiratsuka-shi Kanagawa-ken (JP)**

(74) Representative: **DIEHL GLAESER HILTL & PARTNER**
**Patentanwälte Flüggenstrasse 13**
**D-8000 München 19 (DE)**

Courier Press, Leamington Spa, England.

**Description**

This invention relates to a fire-retardant fiber-reinforced polyamide resin composition, and more specifically, to a fire-retardant fiber-reinforced polyamide resin composition comprising as a main ingredient a polyamide resin derived from xylylenediamine and a linear aliphatic dibasic acid.

A polyamide resin synthesized from a xylylenediamine, particularly xylylenediamine composed mainly of m-xylylene diamine and a linear aliphatic dibasic acid (the resin will be referred to as "MX-nylon" hereinafter) is a synthetic resin which has arisen a great deal of interest as a material for production of high elastic modulus fibers or biaxially stretched film. However, unstretched articles of this resin (for example, injection-molded articles) have not generally been considered to be industrially valuable. Ordinary polyamide resins such as nylon 6 [poly(epsilon-caprolactam)] and nylon 66 [poly(hexamethylene adipamide)] have the property of undergoing ductile fracture at ordinary temperature, particularly in air having an ordinary humidity, and are tough even in the unstretched state. Accordingly, unstretched articles of the ordinary polyamide resins (such as unstretched films, extruded tubes and injection-molded articles) as well as their stretched articles such as fibers, monofilaments and biaxially stretched films have gained commercial acceptance for many years. In contrast, the MX nylon in the unstretched state has the property of undergoing brittle fracture at ordinary temperature and possesses very inferior impact strength. Because of this property, unstretched articles of the MX-nylon have been considered to be unable to find any industrial value.

The present inventors have long been engaged in a study of the practical application of unstretched articles of MX nylon. They previously found that blending of glass fibers with the MX-nylon greatly reduces the brittleness of its molded articles and can give a molding material or molded article which has better properties than molded articles of known glass fiber-reinforced thermoplastic resins in regard to heat resistance, chemical resistance (solvent resistance), water resistance (particularly hot water resistance), rigidity, mechanical strengths such as impact strength, etc., and that when a certain amount of nylon-66 is further added to the glass fiber-reinforced MX-nylon, it is possible to shorten markedly the molding cycle time of the resulting molding material which dominates the cooling time required for injection molding. Based on these findings, they previously proposed polyamide resin compositions for molding, comprising 100 parts by weight of a mixed polyamide resin prepared by mixing 3 to 97 parts by weight of a polyamide resin obtained from a xylylenediamine composed mainly of m-xylylenediamine and a straight chain aliphatic dibasic acid with 97 to 3 parts by weight of nylon-66, and, blended therewith, 10 to 100 parts by weight of a glass fiber (see Miyamoto et al., U.S. Patent 3,968,071).

These glass fiber-reinforced polyamide resin compositions, however, have not proved to be entirely satisfactory from the standpoint of fire retardancy, and some are found unacceptable by the vertical burning test according to the UL burning test standards. In particular, regulations and requirements for fire retardancy of plastic molded articles have recently become increasingly rigorous in order to secure safety in the handling and use of these articles. The present inventors have therefore further worked on the fire retardancy of the aforesaid polyamide resin compositions.

It has previously been known that polyamide resins such as nylon 6 and nylon-66 are rendered fire-retardant by incorporating organic halogen compounds as is the case with other synthetic resins. Some of these organic halogen compounds, however, decompose during burning to generate hydrogen halides which promote decomposition of the amide linkage of the polyamide resins and make them easily flammable. Furthermore, some organic halogen compounds such as tribromoaniline, perchloropentacyclodecane and decabromobiphenyl ether do not have high heat stability and may volatilize and dissipate in molding processes such as injection molding and extrusion molding during which they are exposed to relatively high temperatures. Consequently, the desired fire retardancy cannot be obtained, and the volatilization of such compounds pollutes the working environment. Moreover, these compounds may cause coloration of the resulting molded articles to degrade their properties markedly.

On the other hand, molded articles of resins not containing glass fibers show a UL fire retardancy rating of about V—2. When glass fibers are incorporated, the molten resin has difficulty in dropping, and the glass fibers act like a wick. As a result, the molded article continues to burn and frequently becomes unacceptable by the UL burning test standards.

In view of the foregoing problems, it is technically very important in practice what organic halogen compounds should be selected as fire retarding agents in imparting fire retardancy to plastic molding materials or molded articles.

FR—A—2378824 discloses fire-retardant fiber-reinforced polyamide compositions which are especially based on polyamide-6,6, brominated oligostyrene, antimony trioxide and glass-fibers.

The present inventors have extensively studied the fire retardancy of the aforesaid fiber-reinforced polyamide resin molding composition comprising a polyamide resin mixture composed mainly of MX-nylon and glass fibers. This work has led to the discovery that the combined use of brominated polystyrene and antimony trioxide in specified proportions as a fire-retarding agent can successfully make the fiber-reinforced polyamide resin composition fire-retardant.

According to the present invention, there is provided a fire-retardant fiber-reinforced polyamide resin composition comprising a polyamide resin mixture composed of (a) a polyamide resin derived from a xylylenediamine and a linear aliphatic dibasic acid and (b) nylon-66, the amount of the polyamide resin (a)

2

being 70 to 97% by weight based on the weight of the mixture, and 10 to 150 parts, per 100 parts by weight of the polyamide resin mixture, of glass fibers, said resin composition further comprising 5 to 30 parts by weight, per 100 parts by weight, of the polyamide resin mixture, of a fire retardant, said fire retardant consisting of 1 part by weight of antimony trioxide and 1 to 6 parts by weight of brominated polystyrene.

The polyamide resin derived from a xylylenediamine and a linear aliphatic dibasic acid which is the main component of the resin composition to be rendered fire-retardant in accordance with the present invention is known *per se*. Typical examples are polyamide resins (i.e. MX-nylon) produced by the polycondensation reaction of xylylenediamine composed mainly of m-xylylenediamine such as m-xylylenediamine itself or a mixture of 60% or more of m-xylylenediamine and 40% or less of p-xylylenediamine with linear aliphatic dibasic acids. The dibasic acid used in producing these polyamide resins is preferably an alpha, omega-linear aliphatic dibasic acid having 6 to 12 carbon atoms. Specific examples include adipic acid, sebacic acid, suberic acid, undecanedioic acid and dodecanedioic acid. Adipic acid is most suitable. The MX-nylons can have a relative viscosity of generally 1.7 to 2.9, preferably 1.9 to 2.4. In the present specification, the term "relative viscosity" denotes the viscosity of a polymer measured at 25°C for a solution of 1 g of the polymer in 100 ml of 98% sulfuric acid.

Nylon-66 to be blended with the above polyamide resin is a polyamide resin obtained by the polycondensation reaction of hexamethylenediamine with adipic acid, and may have a relative viscosity of generally 1.7 to 3.0, preferably 1.9 to 2.5.

The proportion of the MX-nylon to be blended is 70 to 97% by weight, preferably 80 to 95% by weight, based on the polyamide resin mixture. The remainder of the polyamide resin mixture is nylon-66.

By blending MX-nylon with nylon-66, it is possible to shorten the molding cycle time of the resulting polyamide resin composition and to improve the operability of the composition during molding. If, however, the proportion of nylon-66 becomes too high, the resulting molding material or molded article tends to have reduced fire retardancy.

Glass fibers are incorporated into the polyamide resin mixture composed of the MX-nylon and nylon-66. The glass fibers may be any glass fibers which are ordinarily used for reinforcing plastic molded articles. Advantageously, the glass fibers have a length of generally 1 to 13 mm, preferably 1.5 to 6 mm, and a diameter of generally 5 to 30 μm, preferably 10 to 15 μm. The amount of the glass fibers may be selected properly depending upon their length or diameter or the required degree of reinforcement within the range of 10 to 150 parts by weight, preferably 30 to 130 parts by weight, more preferably 40 to 100 parts by weight, per 100 parts by weight of the polyamide resin mixture.

The characteristic feature of this invention is to render the aforesaid resin composition fire-retardant very effectively by incorporating a specified amount of a specified fire retardant in the aforesaid fiber-reinforced polyamide resin composition. The fire retardant used in this invention is a combination of antimony trioxide and brominated polystyrene. The proportion of brominated polystyrene is from 1 to 6 parts by weight, preferably from 1.5 to 4 parts by weight, per part by weight of antimony trioxide.

Antimony trioxide is used in the form of a fine solid powder, and from the viewpoint of the effect of fire retardancy, is preferably as fine as possible. Generally, its size is conveniently 50 mesh pass, preferably 100 mesh pass.

Brominated styrene is prepared by brominating polystyrene. From the viewpoint of the effect of fire retardancy and the moldability of the resin composition, the polystyrene has a degree of polymerization of 100 to 250, and the brominated polystyrene advantageously has a bromine content of generally 50 to 80% by weight, preferably 60 to 80% by weight.

Antimony trioxide and brominated styrene may be added separately or as a mixture to the polyamide resin mixture.

The proportion of the fire retardant composed of antimony trioxide and brominated polystyrene is from 5 to 30 parts by weight, preferably from 10 to 25 parts by weight, per 100 parts by weight of the polyamide resin mixture. If the amount of fire retardant is smaller than the specified lower limit, the fire-retardant cannot fully produce a fire-retarding effect. If, on the other hand, it is larger than the specified upper limit, the resulting fire-retardant resin composition may have reduced flowability and poor moldability and give molded articles having reduced mechanical properties such as reduced impact strength.

As required, the polyamide resin composition of this invention may further contain inorganic fillers such as calcium carbonate, magnesium carbonate, magnesium sulfate, alumina, zinc oxide, mica, talc, kaolin and clay, and if further necessary, one or more conventional resin additives such as antioxidants, heat stabilizers, ultra-violet absorbers, plasticizers, nucleating agents, antistatic agents, lubricants, and colorants.

The polyamide resin composition of this invention can be prepared by methods known *per se,* for example by melt-kneading the aforesaid ingredients by a screw extruder or a similar apparatus. The preferred kneading temperature is 5 to 50°C higher than the melting point of the polyamide resin compositions.

The polyamide resin composition of this invention has excellent fire retardancy and also superior tensile strength, elongation, tensile modulus, flexural strength, impact strength and heat resistance as demonstrated by Examples to be given hereinbelow.

It can be advantageously used in electrical and electronical applications as resistor base plates, a front plate and a puller for printed circuit boards, various types of switches, line printer components, pump motor housings and connectors.

The following Examples and Comparative Examples illustrate the present invention more specifically.

The vertical burning test was carried out in accordance with the UL standards.

Specifically, 10 test pieces of a predetermined size were prepared from one sample, and the vertical burning test was carried out by the following procedure.

The upper end of a test piece is clamped by means of a clamp to set it vertically. A flame was applied to its lower end for 10 seconds and then moved away. Then, the burning time of the test piece was measured (first time). When the fire went out, the flame was again applied to the lower end of the test piece for 10 seconds and moved away. The burning time of the test piece was then measured (second time).

The same measurement was repeated on 5 test pieces. Thus, the 5 burning time data in the first time and the 5 burning time data in the second time were obtained. The sum of the 10 data is designated as T, and the largest value among the 10 data, as M.

The sample has a rating of V—0 or V—1 when it meets the following conditions.

| V—0 | V—1 |
|---|---|
| $T \leqq 50$ seconds | $T \leqq 250$ seconds |
| $M \leqq 10$ seconds | $M \leqq 30$ seconds |
| The sample did not burn up to the clamp. | Same as in V—0 |
| A flaming molten drip of the sample did not lead to the ignition of a cotton cloth placed 30.5 cm (12 inches) below the sample. | Same as in V—0 |

The various properties shown in Table 1 were tested by the following methods.

*Molding conditions*
Mold temperature: 130°C
Resin temperature: 255°C
Injection time: 15 seconds
Cooling time: 15 seconds

*Testing methods*
Tensile strength: ASTM D 638
Tensile elongation: ASTM D 638
Tensile modulus: ASTM D 638
Flexural strength: ASTM D 790
Flexural modulus: ASTM D 790
Izod impact strength: ASTM D 256
Heat distortion temperature: ASTM D 648

Example 1

Ninety parts by weight of pellets of poly(m-xylylene adipamide) having a relative viscosity, measured at 25°C for a solution of 1 g of the polymer in 100 ml of 98% sulfuric acid, of 2.40, 10 parts by weight of nylon 66 [poly(hexamethylene adipamide)] having a relative viscosity, measured in the same way, of 2.65, 50 parts by weight of chopped strands of glass fibers 3 mm long and 14 µm in diameter, 12 parts by weight of brominated polystyrene (degree of polymerization about 190; bromine content 68% by weight) and 7 parts by weight of antimony trioxide were mixed by a V-type blender. The mixture was melt-kneaded by a vent-type extruder and extruded into a cord form. The extrudate was cooled in a water bath, cut, and dried to produce a pelletized molding material.

The molding material was injection-molded at a mold temperature of 130°C. The molded article was tested for its properties and subjected to the vertical burning test. The results are shown in Table 1. The heat stability of the composition during the molding operation was determined by examining the relation of the coloration and tensile strength of the molded article to the residence time at 280°C, and the results are shown in Table 2 together with the results obtained in Comparative Example 4.

Examples 2 to 7

In each run, the procedure of Example 1 was repeated except that the proportions of the ingredients of the composition were changed as shown in Table 1. The results are also shown in Table 1.

Comparative Example 1

One hundred parts by weight of the same nylon 66 as used in Example 1 was blended with 50 parts by weight of chopped strands of glass fibers 3 mm long, 15 parts by weight of brominated polystyrene and 8 parts by weight of antimony trioxide, and then melt-kneaded and extruded by an extruder to form a pelletized molding material.

The properties of a test sample obtained by injection molding of the molding material were tested, and it was also subjected to the vertical burning test. The results are shown in Table 1.

Comparative Examples 2 and 3

A pelletized molding material was produced by the procedure of Example 3 except that brominated polystyrene or antimony oxide was used alone as the fire retardant.

The properties of a test sample obtained by injection molding of the material were tested, and it was also subjected to the vertical burning test. The results are shown in Table 1.

Comparative Example 4

A pelletized molding material was produced in the same way as in Example 1 except that 27 parts by weight of perchloropentacyclodecane (Dechlorane Plus, a product of Hooker Chemical Corporation) alone was used instead of the brominated polystyrene and antimony trioxide. The properties of a test sample obtained by injection molding of the molding material were tested, and it was also subjected to the vertical burning test. The results are shown in Table 1.

The heat stability of the composition during the molding operation was determined by examining the relation of the coloration and tensile strength of the molded article to the residence time at 280°C. The results are shown in Table 2 in comparison with those obtained in Example 1.

Table 1

| | | | Example | | | | | | | Comparative Example | | | |
|---|---|---|---|---|---|---|---|---|---|---|---|---|---|
| | | | 1 | 2 | 3 | 4 | 5 | 6 | 7 | 1 | 2 | 3 | 4 |
| Composition | MX-nylon | Parts by weight | 90 | 90 | 90 | 90 | 88 | 80 | 70 | | 90 | 90 | 90 |
| | Nylon-66 | " | 10 | 10 | 10 | 10 | 12 | 20 | 30 | 100 | 10 | 10 | 10 |
| | Glass fibers | " | 50 | 50 | 48 | 78 | 116 | 50 | 50 | 50 | 48 | 48 | 50 |
| | Brominated polystyrene | " | 12 | 10 | 8 | 12 | 12 | 12 | 15 | 15 | 11 | 0 | 27(*) |
| | Antimony trioxide | " | 7 | 5 | 3 | 6 | 5 | 7 | 8 | 8 | 0 | 11 | |
| Properties | Specific gravity | | 1.596 | 1.587 | 1.543 | 1.653 | 1.741 | 1.598 | 1.623 | 1.391 | 1.572 | 1.617 | 1.502 |
| | Tensile strength | $kg/cm^2$* | 2069 | 2183 | 1881 | 2030 | 2210 | 2050 | 2030 | 1515 | 1940 | 1865 | 1790 |
| | Elongation | % | 1.51 | 1.53 | 1.70 | 1.67 | 1.52 | 1.80 | 1.85 | 2.42 | 1.95 | 1.64 | 2.45 |
| | Tensile modulus | $10^3 kg/cm^2$* | 144 | 146 | 125 | 154 | 195 | 135 | 130 | 91 | 124 | 131 | 132 |
| | Flexural strength | $kg/cm^2$* | 2739 | 2705 | 2542 | 2900 | 3100 | 2540 | 2530 | 2214 | 2579 | 2472 | 2210 |
| | Flexural modulus | $10^3 kg/cm^2$* | 128 | 128 | 113 | 148 | 179 | 110 | 107 | 83 | 118 | 110 | 104 |
| | Izod impact strength | kg-cm/cm | 8.9 | 8.9 | 8.3 | 9.6 | 10.2 | 9.2 | 9.5 | 7.2 | 8.5 | 7.4 | 3.0 |
| | Heat distortion temperature | °C | 232 | 230 | 224 | 231 | 230 | 235 | 237 | 241 | 225 | 227 | 224 |

* $\wedge Kg\ 1 cm^2 \triangleq 0.981$ bar

Table 1 (continued)

| | | | | Example | | | | | | | Comparative Example | | | |
|---|---|---|---|---|---|---|---|---|---|---|---|---|---|---|
| | | | | 1 | 2 | 3 | 4 | 5 | 6 | 7 | 1 | 2 | 3 | 4 |
| Results of the vertical burning test | Test piece (1/8 inch) (3.175cm) | T | sec | 4.6 | 11.1 | 21.1 | 7.8 | 9.7 | 9.8 | 21.5 | Burned totally | 39.7 | Burned totally | 22.6 |
| | | M | sec | 0.9 | 2.5 | 4.2 | 1.4 | 1.6 | 1.8 | 4.5 | | 7.4 | | 5.1 |
| | | V-O | | O | O | O | O | O | O | O | X | O | X | O |
| | Test piece (1/16 inch) (1.59cm) | T | sec | 10.3 | 22.9 | 90.1 | 13.0 | 9.0 | 13.5 | 95.1 | Burned totally | Burned totally | Burned totally | 35.1 |
| | | M | sec | 2.1 | 5.2 | 17.2 | 2.4 | 2.0 | 2.6 | 18.3 | | | | 6.4 |
| | | V-1 | | O | O | O | O | O | O | O | X | X | X | O |

(*): Perchloropentacyclodecane

O : Acceptable

X : Unacceptable

EP 0 172 259 B1

Table 2

| Residence time (minutes at 280 °C) | Composition of Example 1 | | Composition of Comparative Example 4 | |
|---|---|---|---|---|
| | Color | Tensile strength $(kg/cm^2)$ ($\triangleq$ 0.981 bar) | Color | Tensile strength $(kg/cm^2)$ ($\triangleq$ 0.981 bar) |
| 1 | O | 1810 | O | 1515 |
| 15 | O | 1810 | Δ | 1470 |
| 30 | O | 1811 | Δ | 1423 |
| 45 | O | 1807 | X | 547 |
| 60 | O | 1793 | XX | 288 |

O : No change at all

Δ : Yellow

X : Light brown

XX : Brown

## Claims

1. A fire-retardant fiber-reinforced polyamide resin composition comprising a polyamide resin mixture composed of (a) a polyamide resin derived from a xylylenediamine and a linear aliphatic dibasic acid and (b) nylon-66, the amount of the polyamide resin (a) being 70 to 97% by weight based on the weight of the mixture, and 10 to 150 parts, per 100 parts by weight of the polyamide resin mixture, of glass fibers, said resin composition further comprising 5 to 30 parts by weight, per 100 parts by weight, of the polyamide resin mixture, of a fire retardant, said fire retardant consisting of 1 part by weight of antimony trioxide and 1 to 6 parts by weight of brominated polystyrene, having a degree of polymerisation of 100—250.

2. The composition of claim 1 wherein the proportion of the fire retardant is 10 to 25 parts by weight per 100 parts by weight of the polyamide resin mixture.

3. The composition of claim 1 wherein the fire retardant is composed of 1 part by weight of antimony trioxide and 1.5 to 4 parts by weight of brominated polystyrene.

4. The composition of claim 1 wherein the brominated polystyrene has a bromine content of 50 to 80% by weight.

5. The composition of claim 4 wherein the bromine content of the brominated polystyrene is 60 to 80% by weight.

6. The composition of claim 1 wherein the amount of the polyamide resin (a) is 80 to 95% by weight based on the weight of the polyamide resin mixture.

7. The composition of claim 1 wherein the xylylenediamine is m-xylylenediamine or a mixture of at least 60% of m-xylylenediamine and not more than 40% of p-xylylenediamine.

8. The composition of claim 1 wherein the linear aliphatic dibasic acid is adipic acid.

9. The composition of claim 1 wherein the proportion of the glass fibers is 30 to 130 parts by weight per 100 parts by weight of the polyamide resin mixture.

## Patentansprüche

1. Flammhemmende faserverstärkte Polyamidharzzusammensetzung, enthaltend ein Polyamidharzgemisch aus (a) einem Polyamidharz, das von einem Xylylendiamin und einer linear aliphatischen zweibasigen Säure abgeleitet ist, und (b) Nylon 66, wobei die Menge des Polyamidharzes (a) 70 bis 97 Gew.-%, bezogen auf das Gewicht des Gemisches, ausmacht, und 10 bis 150 Teile Glasfasern, bezogen auf 100 Gewichtsteile des Polyamidharzgemisches, und ferner 5 bis 30 Gewichtsteile, bezogen auf 100 Gewichtsteile des Polyamidharzgemisches, eines Flammschutzmittels, das aus 1 Gewichtsteil Antimontrioxid und 1 bis 6 Gewichtsteilen bromiertem Polystyrol besteht, das einen Polymerisationsgrad von 100 bis 250 aufweist.

8

2. Zusammensetzung nach Anspruch 1, worin der Anteil des Flammschutzmittels 10 bis 25 Gewichtsteile pro 100 Gewichtsteile des Polyamidharzgemisches ausmacht.

3. Zusammensetzung nach Anspruch 1, worin das Flammschutzmittel aus 1 Gewichtsteil Antimontrioxid und 1,5 bis 4 Gewichtsteilen bromiertem Polystyrol besteht.

4. Zusammensetzung nach Anspruch 1, worin das bromierte Polystyrol einen Bromgehalt von 50 bis 80 Gewichtsprozent aufweist.

5. Zusammensetzung nach Anspruch 4, worin der Bromgehalt des bromierten Polystyrols 60 bis 80 Gew.-% beträgt.

6. Zusammensetzung nach Anspruch 1, worin die Menge an Polyamidharz (a) 80 bis 95 Gew.-%, bezogen auf das Polyamidharzgemisch, beträgt.

7. Zusammensetzung nach Anspruch 1, worin das Xylylendiamin m-Xylylendiamin oder ein Gemisch aus mindestens 60% m-Xylylendiamin und höchstens 40% p-Xylylendiamin ist.

8. Zusammensetzung nach Anspruch 1, worin die lineare aliphatische zweibasige Säure Adipinsäure ist.

9. Zusammensetzung nach Anspruch 1, worin der Anteil der Glasfasern 30 bis 130 Gew.-%, bezogen auf 100 Gew.-% des Polyamidharzgemisches, beträgt.

**Revendications**

1. Une composition de résines de polyamides renforcée par des fibres et ignifugée, qui comprend un mélange de résines de polyamides formé de (a) une résine de polyamide, d'une xylylène-diamine et d'un diacide aliphatique linéaire, et (b) de nylon-66, la proportion de la résine (a) étant de 70 à 97% du poids total de ce mélange, avec de 10 à 150 parties en poids de fibres de verre pour 100 parties du mélange de résines, composition qui comprend en outre de 5 à 30 parties en poids, toujours pour 100 parties du mélange de résines, d'un agent ignifuge formé de 1 partie en poids de trioxyde d'antimoine et 1 à 6 parties en poids de polystyrène bromé ayant un degré de polymérisation de 100 à 250.

2. La composition de la revendication 1 dans laquelle la proportion de l'agent d'ignifugeage est de 10 à 25 parties en poids pour 100 parties du mélange de résines de polyamides.

3. La composition de la revendication 1 dans laquelle l'agent d'ignifugeage est constitué de 1 partie en poids de trioxyde d'antimoine pour 1,5 à 4 parties de polystyrène bromé.

4. La composition de la revendication 1 dans laquelle le polystyrène bromé a une teneur en brome de 50 à 80% en poids.

5. La composition de la revendication 4 dans laquelle la teneur en brome du polystyrène bromé est de 60 à 80% en poids.

6. La composition de la revendication 1 dans laquelle la proportion de la résine de polyamide (a) est de 80 à 95% du poids du mélange des deux résines de polyamides.

7. La composition de la revendication 1 dans laquelle la xylylène-diamine est la m-xylylène-diamine ou un mélange d'au moins 60% de m-xylylène-diamine et d'au maximum 40% de p-xylylène-diamine.

8. La composition de la revendication 1 dans laquelle le diacide aliphatique linéaire est l'acide adipique.

9. La composition de la revendication 1 dans laquelle la proportion des fibres de verre est de 30 à 130 parties en poids pour 100 parties du mélange de résines de polyamides.